# EUROPÄISCHE PATENTSCHRIFT

(11) **EP 2 680 375 B1**
(45) Veröffentlichungstag und Bekanntmachung des Hinweises auf die Patenterteilung: **08.08.2018**
(21) Anmeldenummer: 13305709.1
(22) Anmeldetag: 30.05.2013
(51) Int. Cl.: H01R 35/02, B60R 16/027, H04N 7/18, H01F 38/18

(54) **Anordnung zur drahtlosen Übertragung von elektrischen Signalen in einem Kraftfahrzeug**
Assembly for the wireless transmission of electrical signals in a motor vehicle
Agencement pour la transmission sans fil de signaux électriques dans un véhicule automobile

(30) Priorität: 27.06.2012 EP 12305752
(43) Veröffentlichungstag der Anmeldung: 01.01.2014
(73) Patentinhaber: Nexans, 92400 Courbevoie (FR)
(72) Erfinder: Dr. Steinberg, Helmut, 92721 Störnstein (DE); Schröer, Frank, 92637 Weiden (DE)
(74) Vertreter: Lenne, Laurence

(56) Entgegenhaltungen:
- JP-A- 2008 062 906
- US-B1- 6 542 758

## Beschreibung

Die vorliegende Erfindung betrifft ein Kraftfahrzeug mit einer Anordnung zur drahtlosen Übertragung von elektrischen Signalen in dem Kraftfahrzeug, das mit einem in einer feststehenden Lenksäule drehbaren Lenkrad ausgerüstet ist, wobei bei der Anordnung im Kraftfahrzeug ein Sender zum Aussenden der elektrischen Signale und ein Empfänger zum Empfang derselben angebracht sind.

Ein Kraftfahrzeug mit einer derartigen Anordnung ist beispielsweise in der US 6,542,785 B1 beschrieben.

Eine solche Anordnung wird beispielsweise benötigt, um die von einer im Heckbereich eines Kraftfahrzeugs - im folgenden kurz "Fahrzeug" genanntangebrachten Kamera erfaßten Informationen (Bilder) zu einer im Fahrzeug angebrachten Anzeige zu übertragen, beispielsweise zu einem Bildschirm. Eine derartige Anordnung erlangt erhöhte Bedeutung, wenn die gesamte Umgebung eines Fahrzeugs durch Kameras mit einem sogenannten "bird-view"-System überwacht werden soll und kann. Es können aber auch beliebige, Fahrzeug interne Informationen zwischen Sender und Empfänger übertragen werden. Die in einem Fahrzeug im Bereich des Lenkrades in der Regel vorhandenen elektrischen Leitungen sind zur Übertragung von hohen Datenraten, wie beispielsweise von Videosignalen, nicht geeignet. Solche Leitungen werden beispielsweise zur Betätigung eines Airbags oder einer Hupe verwendet.

Aus der DE 103 43 147 A1 geht eine Vorrichtung zur drahtlosen Übertragung von elektrischen Signalen von einem am Lenkrad eines Fahrzeugs angebrachten Sendemodul zu einem an einem ortsfesten Bereich bzw. am Chassis des Fahrzeugs angeordneten Empfangsmodul hervor. Sendemodul und Empfangsmodul sind beide mit einem Mikrocontroller ausgerüstet. Der Mikrocontroller des Empfangsmoduls wandelt empfangene Signale in Schalt- und/oder Steuersignale für elektrische Einrichtungen des Fahrzeugs um.

Das eingangs beschriebene Fahrzeug mit einer Anordnung zur drahtlosen Übertragung von elektrischen Signalen in demselben geht aus der US 6,542,758 B1 hervor. Die Anordnung ist entsprechend dieser Schrift eine Mobilfunkanlage, bei welcher eine Kommunikation zwischen einem in dem Fahrzeug befindlichen Funktelefon und räumlich weit entfernten Geräten durchgeführt werden kann. Zum Betrieb des Funktelefons gehören eine Basiseinheit mit einem Sendeempfänger und eine Steuereinheit, die im Fahrzeug entfernt von der Basiseinheit angeordnet ist, sowie ein lokales Netzwerk zum Aufbauen einer Kommunikationsverbindung zwischen der Basiseinheit und der Steuereinheit. Die Basiseinheit kann in einer Konsole oder im Kofferraum des Fahrzeugs angebracht sein, während die Steuereinheit am Lenkrad desselben angeordnet ist. Sie enthält eine Tastatur zum Eingeben von Befehlen und Daten, die über das lokale Netzwerk zur Basiseinheit übertragen werden.

Der Erfindung liegt die Aufgabe zugrunde, das eingangs geschilderte Fahrzeug so auszurüsten, dass die vom Empfänger empfangenen Signale auf einfache Weise und unter Ausnutzung von im Fahrzeug vorhandenen Bauteilen für den Fahrzeugführer erkennbar zur Anzeige gebracht werden können.

Diese Aufgabe wird entsprechend der Gesamtheit der Merkmale des Patentanspruchs 1 gelöst.

Die in dem Fahrzeug angebrachte Anordnung ist einfach aufgebaut und kompakt auf den Bereich des Lenkrades desselben begrenzt. Sender und Empfänger sind damit sehr nahe beieinander angeordnet, so dass Störungen anderer Komponenten durch die zwischen beiden Geräten übertragenen Signale ebenso ausgeschlossen werden können, wie eine Störung der drahtlosen Übertragung durch andere elektromagnetische Felder. In der Anordnung sind die Elemente der im Lenkrad angeordneten, einen Stator und einen Rotor aufweisenden Kassette ausgenutzt, in welcher eine in Windungen verlaufende, der Stromversorgung von Komponenten des Fahrzeugs dienende elektrische Leitung angeordnet ist. Die Entfernung zwischen Sender und Empfänger ist dadurch optimal klein, dass der Sender direkt am Stator der Kassette angebracht ist. Die vom Empfänger empfangenen Signale bzw. Informationen werden an der ebenfalls am Lenkrad befindlichen Anzeige sichtbar gemacht, so dass der Fahrzeugführer beispielsweise beim Rückwärtsfahren, aber bei entsprechender Ausrüstung auch rund um das Fahrzeug, über mögliche Hindernisse und andere Gegebenheiten rund um das Fahrzeug ständig informiert ist. Für den Betrieb von Empfänger und Anzeige ist die in der Kassette vorhandene Leitung vorteilhaft ausgenutzt.

Kassetten, welche aus einem Stator und einem in demselben drehbaren Rotor bestehen, zwischen denen mindestens eine in Windungen verlaufende elektrische Leitung angeordnet ist, gehen beispielsweise aus der EP 1 973 205 A1 hervor. Sie dienen im wesentlichen der Stromversorgung von Komponenten eines Fahrzeugs und können der Drehbewegung des Lenkrades desselben ohne den Einsatz von Schleifkontakten folgen. Die jeweils eingesetzte elektrische Leitung ist mit Vorteil als Flachband-Leitung ausgeführt. Sie kann entsprechend der Unruh einer Uhr in mehreren Windungen verlaufen. Die Leitung kann auch in der sogenannten Umkehrtechnik aus zwei Bereichen mit entgegengesetzter Wickelrichtung bestehen, die durch eine Umkehrstelle verbunden sind. Zwischen den beiden Bereichen einer solchen Leitung kann auch ein Führungskörper angebracht sein. Bei der Ausführungsform in Umkehrtechnik können auch zwei oder mehr Leitungen in einer Kassette untergebracht sein.

Ein Ausführungsbeispiel des Erfindungsgegenstandes ist in den Zeichnungen dargestellt.

Es zeigen:
Fig. 1 schematisch ein an einer Lenksäule eines Fahrzeugs angebrachtes Lenkrad.
Fig. 2 ebenfalls schematisch einen Schnitt durch eine in einem Lenkrad zu montierende Kassette in vergrößerter Darstellung.
Fig. 3 eine Draufsicht auf ein Lenkrad.
Fig. 4 die im Fahrzeug nach der Erfindung angebrachte Anordnung ebenfalls in schematischer Darstellung.

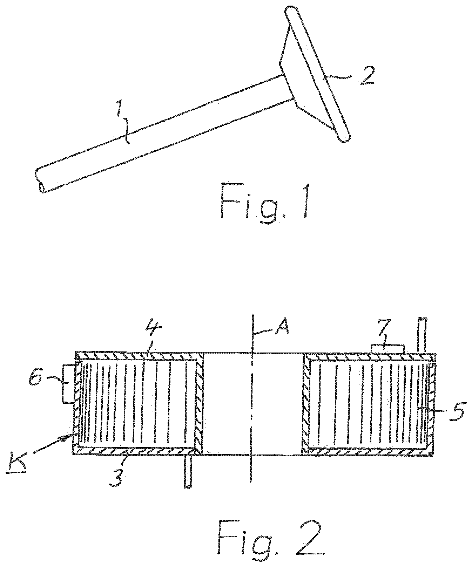

In Fig. 1 ist eine Lenksäule 1 eines Fahrzeugs ohne weitere Einzelheiten dargestellt, in welcher ein Lenkrad 2 um seine Achse drehbar gelagert ist.

Im Lenkrad 2 ist eine der Stromversorgung von Komponenten des Fahrzeugs dienende Kassette K angebracht, die aus einem im Montagezustand mit der Lenksäule 1 verbundenen Stator 3 und einem um eine Achse A drehbar in demselben angeordneten und mit dem Lenkrad 2 verbundenen Rotor 4 besteht. Zwischen Stator 3 und Rotor 4 ist im dargestellten Ausführungsbeispiel eine in Windungen verlaufende elektrische Leitung 5 angebracht, mit Vorteil eine Flachband-Leitung bzw. eine Flachleiter-Bandleitung. Sie ist mit einem Ende am Stator 3 der Kassette K und mit dem anderen Ende an deren Rotor 4 festgelegt. In einer solchen Leitung sind mindestens zwei parallel und mit Abstand zueinander verlaufende elektrische Leiter angeordnet, die in Isoliermaterial eingebettet sind. Die Leitung 5 ist im Montagezustand mit einer Spannungsquelle des Fahrzeugs verbunden, vorzugsweise mit der Batterie desselben.

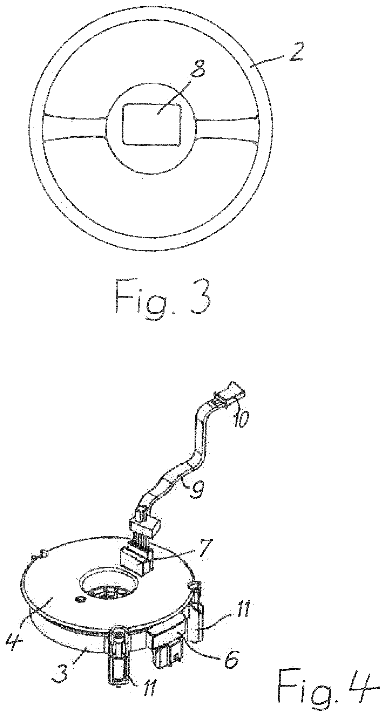

Direkt am Stator 3 der Kassette K ist entsprechend der Darstellung in den Fig. 2 und 4 ein Sender 6 für elektrische Signale, insbesondere für Video-Signale, angebracht, der zu seiner Stromversorgung an die Spannungsquelle des Fahrzeugs angeschlossen ist. Dem Sender 6 werden von im oder am Fahrzeug angeordneten "Quellen", wie beispielsweise Kameras, Informationen zugeführt, die mit drahtloser Übertragung zu einem Empfänger 7 für elektrische Signale übertragen werden.

Der Empfänger 7 ist mit dem Rotor 4 der Kassette K verbunden. Er ist direkt am Rotor 4 angebracht, so wie es aus den Fig. 2 und 4 hervorgeht. Der Empfänger 7 ist zu seiner Stromversorgung elektrisch leitend mit der Leitung 5 der Kassette K verbunden. An den Empfänger 7 ist eine vorzugsweise als Bildschirm ausgeführte Anzeige 8 angeschlossen, und zwar über eine elektrische Leitung 9. Auch die Anzeige 8 ist zu ihrer Stromversorgung elektrisch leitend mit der Leitung 5 der Kassette K verbunden. Das kann mit Vorteil über die Leitung 9 erfolgen, über welche auch die vom Empfänger 7 empfangenen Signale zur Anzeige 8 übertragen werden.

Die Leitung 9 ist entsprechend der Darstellung in Fig. 4 mit einem Stecker 10 abgeschlossen, mittels dessen sie elektrisch leitend mit der Anzeige 8 verbunden werden kann. Die vom Sender 6 gelieferten Signale werden in der Anzeige 8 so umgesetzt bzw. aufbereitet, dass dem Fahrzeugführer von derselben eine deutlich erkennbare Information zur Verfügung gestellt wird. Das kann bei einer als Bildschirm ausgeführten Anzeige ein Bild sein. Die in Fig. 4 ebenfalls eingezeichneten Schrauben 11 dienen zur Befestigung des Stators 3 der Kassette K an der Lenksäule 1 des Fahrzeugs.

Wie insbesondere aus Fig. 4 hervorgeht, ist die Entfernung zwischen Sender 6 und Empfänger 7 sehr kurz. Wie bereits erwähnt, kann daher eine Störung anderer Geräte bzw. Komponenten des Fahrzeugs durch die zwischen Sender 6 und Empfänger 7 übertragenen Signale ebenso mit großer Sicherheit ausgeschlossen werden wie eine Störung der drahtlosen Übertragung durch äußere elektromagnetische Felder.

Die Anzeige 8 ist direkt am Lenkrad 2 angebracht, so wie es schematisch in Fig. 3 angedeutet ist. Die Position der Anzeige 8 am Lenkrad 2 muß so gewählt sein, dass das Sichtfeld des Fahrzeugführers nicht beeinträchtigt ist. Da die Anzeige 8 beim Drehen des Lenkrades 2 mitgedreht wird, sollte sie möglichst zentral an demselben angebracht sein. Die an der Anzeige 8 erkennbare Information, insbesondere ein Bild, kann in bekannter Technik elektronisch gedreht werden, so dass sie unabhängig von der Auslenkung des Lenkrades 2 bei dessen Drehbewegung eine stets gleichbleibende Lage hat.

## Patentansprüche

1. Kraftfahrzeug mit einer Anordnung zur drahtlosen Übertragung von elektrischen Signalen in dem Kraftfahrzeug, das mit einem in einer feststehenden Lenksäule drehbaren Lenkrad (2) ausgerüstet ist, wobei bei der Anordnung im Kraftfahrzeug ein Sender (6) zum Aussenden der elektrischen Signale und ein Empfänger (7) zum Empfang derselben angebracht sind, und wobei
- am Lenkrad (2) des Kraftfahrzeugs eine mit einem Stator (3) und einem in demselben drehbaren Rotor (4) ausgerüstete Kassette (K) angeordnet ist, welche mindestens eine zwischen Stator (3) und Rotor (4) angebrachte, in Windungen verlaufende elektrische Leitung (5) aufweist, die mit einem Ende am Stator (3) und mit dem anderen Ende am Rotor (2) der Kassette (K) festgelegt ist, wobei der Stator (3) der Kassette (K) mit der Lenksäule (1) verbunden ist, während deren Rotor (4) mit dem Lenkrad (2) verbunden ist,
- der Sender (6) direkt am Stator (3) der Kassette (K) angebracht ist und
- der Empfänger (7) mechanisch mit dem Rotor (4) der Kassette (K) und elektrisch mittels einer elektrischen Leitung (9) mit einer direkt am Lenkrad (2) angebrachten, empfangene Signale anzeigenden Anzeige (8) verbunden ist.

2. Anordnung nach Anspruch 1, **dadurch gekennzeichnet, dass** sowohl der Empfänger (7) als auch die Anzeige (8) zu ihrer Stromversorgung elektrisch leitend an die Leitung (5) der Kassette (K) angeschlossen sind.

3. Anordnung nach Anspruch 1, **dadurch gekennzeichnet, dass** die Anzeige (8) als Bildschirm ausgeführt ist.

## Claims

1. A motor vehicle with an arrangement for the wireless transmission of electrical signals in the motor vehicle, which is equipped with a steering wheel (2) rotatable in a stationary steering column, wherein in the arrangement in the motor vehicle a transmitter (6) for transmitting the electrical signals and a receiver (7) for receiving the same are attached, and wherein
- on the steering wheel (2) of the motor vehicle cassette (K) is arranged equipped with a stator (3) and a rotor (4) rotatable in the same, which has at least one electrical line (5) attached between stator (3) and rotor (4), running in coils, which line is fixed with one end on the stator (3) and with the other end on the rotor (2) of the cassette (K), wherein the stator (3) of the cassette (K) is connected to the steering column (1), while its rotor (4) is connected to the steering wheel (2),
- the transmitter (6) is attached directly to the stator (3) of the cassette (K) and
- the receiver (7) is connected mechanically with the rotor (4) of the cassette (K) and electrically by means of an electrical line (9) with a display (8) attached directly to the steering wheel (2), indicating received signals.

2. An arrangement according to Claim 1, **characterized in that** both the receiver (7) as well as the display (8) are connected for their power supply electrically conductively to the line (5) of the cassette (K).

3. An arrangement according to Claim 1, **characterized in that** the display (8) is designed as a monitor screen.

## Revendications

1. Véhicule automobile, avec un ensemble destiné à la transmission sans fil de signaux électriques dans le véhicule automobile qui est équipé d'un volant de direction (2) pouvant tourner dans une colonne de direction stationnaire, un émetteur (6) étant, dans l'ensemble dans le véhicule automobile, mis en place pour l'émission des signaux électriques, et un récepteur (7) étant mis en place pour la réception de ceux-ci, et
- une cassette (K) équipée d'un stator (3) et d'un rotor (4) pouvant tourner dans celui-ci étant disposée sur le volant de direction (2) du véhicule automobile et présentant au moins une ligne (5) électrique mise en place entre le stator (3) et le rotor (4) et disposée en spires, la ligne étant immobilisée par une extrémité sur le stator (3) et par l'autre extrémité sur le rotor (2) de la cassette (K), le stator (3) de la cassette (K) étant raccordé à la colonne de direction (1) tandis que son rotor (4) est raccordé au volant de direction (2),
- l'émetteur (6) étant mis en place directement sur le stator (3) de la cassette (K), et
- le récepteur (7) étant raccordé mécaniquement au rotor (4) de la cassette (K) et électriquement, au moyen d'une ligne (9) électrique, à un afficheur (8) mis en place directement sur le volant de direction (2) et affichant des signaux reçus.

2. Ensemble selon la revendication 1, **caractérisé en ce que** le récepteur (7) ainsi que l'afficheur (8) sont pour, leur alimentation en courant, connectés de façon électriquement conductrice à la ligne (5) de la cassette (K).

3. Ensemble selon la revendication 1, **caractérisé en ce que** l'afficheur (8) est réalisé en tant qu'écran.
